Europäisches Patentamt

European Patent Office

Office européen des brevets

(19)

(11) Veröffentlichungsnummer: **0 006 996**
**B1**

(12) **EUROPÄISCHE PATENTSCHRIFT**

(45) Veröffentlichungstag der Patentschrift: **03.02.82**

(51) Int. Cl.³: **G 02 F 1/133, G 06 F 11/16**

(21) Anmeldenummer: **79101762.7**

(22) Anmeldetag: **05.06.79**

(54) Flüssigkristall-Segmentanzeige und Verfahren zu ihrer Ueberwachung.

(30) Priorität: **18.07.78 CH 7754/78**

(43) Veröffentlichungstag der Anmeldung:
**23.01.80 Patentblatt 80/2**

(45) Bekanntmachung des Hinweises auf die Patenterteilung:
**03.02.82 Patentblatt 82/5**

(84) Benannte Vertragsstaaten:
**DE FR GB NL**

(56) Entgegenhaltungen:
**GB - A - 1 536 202**
**US - A - 3 866 171**

**Electronics, Band 47, Nr. 8, 18. April 1974,
Seite 118 New York, U.S.A.
K. J. Wellington: "Continuous monitor for
seven-segments dispays"**
**\* Seite 118 \***

(73) Patentinhaber: **Mettler Instrumente AG
CH-8606 Greifensee (CH)**

(72) Erfinder: **Utzinger, Diethelm, Dipl. El.Ing. ETH
Bionstrasse 15
CH-8006 Zürich (CH)**

Flüssigkristall-Segmentanzeige und Verfahren zu ihrer Ueberwachung

Die Erfindung betrifft eine Flüssigkristallanzeige mit mehreren Segmenten, die an je eine Steuerleitung angeschlossen sind, sowie ein Verfahren zu ihrer Ueberwachung; insbesondere in ihrer Anwendung bei Waagen.

Bei allen Segmentanzeigen besteht das Problem der Funktionsüberwachung. Es muss insbesondere vermieden werden, dass durch Ausfall eines oder mehrerer Anzeigesegmente eine Fallschanzeige resultiert, die nicht als solche erkannt wird.

Zur Lösung dieses Problems ist es beispielsweise bei Anzeigen mit Leuchtdioden bekannt, den Segmentstrom zu kontrollieren. Die Anwendung einer solchen Methode ist bei Flüssigkristallanzeigen nicht praktikabel, da hier die fliessenden Ströme viel zu klein sind.

Aus der US-Patentschrift 3,866,171 ist eine Schaltung bekannt, bei der die in BCD-Form vorliegenden Anzeigedaten zweifach dekodiert werden: Ein erster oder Kontroll-Dekodierer ist dem einen Eingang eines Komparators vorgeschaltet. Ein zweiter (der eigentliche Anzeige-) Dekodierer ist der Treiberschaltung für die Segmente der Gasentladungsanzeige zugeordnet. An jede der Anzeige-Steuerleitungen ist (ausserhalb der Anzeige) eine Prüfleitung angeschlossen, die über eine Prüfschaltung mit dem entsprechenden zweiten Eingang des Komparators verbunden ist. Stimmen die entsprechenden Eingänge eines (oder mehrerer) Segmentes am Komparator nicht überein, so wird ein Fehlersignal erzeugt.

Bei dieser bekannten Anordnung ist also eine zweimalige Dekodierung der BCD-Daten erforderlich. Die Prüfleitungen sind nicht mit den Anzeigesegmenten selbst verbunden.

Aufgabe der Erfindung war es, eine Methode der Funktionsüberwachung bei Flüssigkristallanzeigen zu finden. Dabei wurde speziell von der Tatsache ausgegangen, dass die Anschlüsse der Zuleitungen an die Segmente (welche häufig in Dünnfilmtechnik auf (Glas-)Substrate aufgebracht sind) besonders kritische Stellen sind. Zur Lösung des Problems ist erfindungsgemäss vorgesehen, dass wenigstens ein Teil der Segmente ausserdem direkt an je eine Prüfleitung angeschlossen ist und dass die Prüfleitungen mit einer Kontrolleinrichtung verbunden sind. Je nach Art und Anzahl der durch die Anzeige darzustellenden Symbole kann es dabei zweckmässig sein, alle Segmente erfindungsgemäss an die Kontrolleinrichtung anzuschliessen. Bei Sieben-Segment-Anzeigen nur für Ziffern, wie sie insbesondere bei Waagen vorweigend vorkommen, genügt es, nur diejenigen fünf Segmente zu überwachen, die bei Ausfall falsche, aber nicht aus sich heraus als falsch erkennbare Anzeigen liefern.

Prinzipiell können die Anschlüsse von Steuer und Prüfleitung am Segment beliebig zueinander angeordnet sein, z.B. nebeneinander oder unter einem rechten Winkel zueinander. Bevorzugt wird eine Ausbildung, bei der die Prüfleitung jeweils der Steuerleitung gegenüberliegendan das Segment angeschlossen ist. Dadurch ist neben den beiden Anschlüssen am Segment auch gleich das ganze Segment in die Ueberwachung einbezogen.

Wird eine Anzeige im Multiplex-Verfahren betrieben, so ist eine Ausbildung der Erfindung von Vorteil, bei welcher benachbarte gleichrangige Segmente durch jeweils eine als Steuer- und Prüfleitung dienende Leitung miteinander verbunden sind, wobei die Leitungen von der ersten oder der letzten Stelle der Anzeige zur Kontrolleinrichtung geführt sind. In dieser Ausbildung kann der Aufwand für die Funktionsüberwachung besonders niedrig gehalten werden, insbesondere durch Einsparung von Leitungen.

Zweckmässigerweise kann die Kontrolleinrichtung einen Mikrocomputer umfassen, der bei Auftreten eines Fehlersignals die Anzeige dunkelsteuert.

Erfindungsgemäss wird also ein Verfahren zur Ueberwachung einer Flüssigkristall-Segmentanzeige vorgeschlagen, welches dadurch gekennzeichnet ist, dass der Spannungspegel der jeweiligen Steuerleitung oder -Leitungen wenigstens eines Teils der Segmente mit demjenigen einer am jeweiligen Segment angeschlossenen Prüfleitung verglichen und bei Nichtübereinstimmung ein Fehlersignal erzeugt wird. Dabei kann zweckmassigerweise so vorgegangen werden, dass Bei Auftreten eines Fehlersignals die Ansteuerung der Gegenelektrode(n) unterbleibt.

Ausführungsbeispiele der Erfindung werden im folgenden anhand der Zeichnung näher erläutert. In der Zeichnung sind

Figur 1 eine einstellige Anzeige mit Ueberwachungsschaltung,

Figur 2 eine Detail zu Figur 1,

Figur 3 die Darstellung einer einzelnen dezimale der Anzeige,

Figur 4 eine dreistellige Anzeige mit Ueberwachungsschaltung, und

Figur 5 eine Variante zu Figur 2.

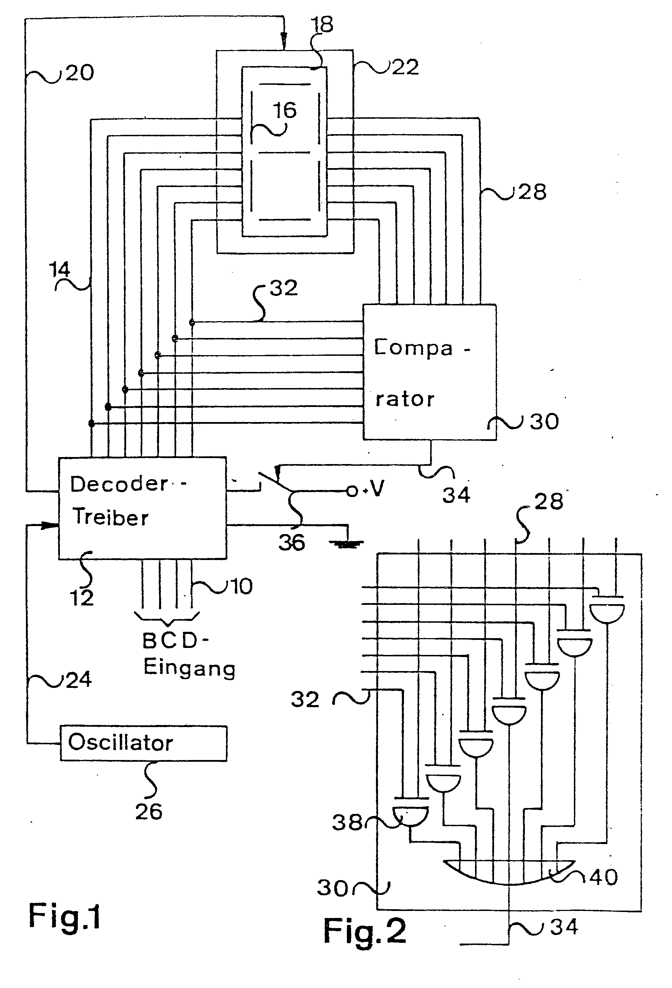

Beispiel I (Figuren 1, 2 und 3)

Figur 1 zeigt eine einstellige Anzeige bzw. eine Stelle einer mehrstelligen Anzeige mit statischem Betrieb (alle Stellen werden gleichzeitig angesteuert).

In bekannter Weise wird der binärdezimal kodierte Anzeigewert (dessen Ermittlung konventionell erfolgt und hier nicht relevant ist) über Leitungen 10 einem Decoder-Treiber 12 zugeführt. Von diesem werden über sieben Leitungen 14 die ausgewählten Segmente 16 des Flüssigkristall-Anzeigeelementes 18 angesteuert. Synchron mit der Ansteuerung der Segmente 16 wird über Leitung 20 die Gegenelektrode 22 angesteuert. Die Taktsteuerung erfolgt über eine Leitung 24 durch einen Oszillator 26. Auf konventionelle Art wird dabei das Anzeigeelement 18 mit Wechselspannung derart beaufschlagt, dass die vom Decoder-Treiber 12 für die Anzeige ausgewählten Segmente 16 im Gegentakt zur Gegenelektrode 22, die dunkel bleibenden Segmente im Gleichtakt mit ihr die Wechselspannung erhalten.

Gemäss der Erfindung ist nun eine Kontrolleinrichtung vorgesehen. Jedes Segment 16 ist über eine Prüfleitung 28 mit einem Komparator 30 verbunden. Ferner ist von jeder Leitung 14 ein Abzweig 32 an den Komparator 30 geführt. In letzterem werden die jeweils zum selben Segment 16 gehörenden Leitungspaare 28, 32 auf gleichen Spannungspegel kontrolliert. Ergibt diese Prüfung für jedes Leitungspaar 28, 32 übereinstimmenden Pegel, so funktioniert das Anzeigeelement 18 ordnungsgemäss, und am Ausgang des Komparators 30 steht kein Signal (bzw. ein Gutsignal) an. Sobald jedoch ein Fehler vorliegt, wird ein Pegelvergleich fehlende Uebereinstimmung ergeben, und der Komparator 30 liefert ein Fehlersignal. Dieses wird über eine Leitung 34 einem elektronischen Schalater 36 zugeführt, der daraufhin die Speisung des Decoder-Treibers 12 unterbricht, die Anzeige wird dunkel.

Figur 2 zeigt eine mögliche Ausführungsform des Komparators 30. Er umfasst sieben Exklusiv-ODER-Tore 38, deren jedes einem Segment 16 zugeordnet ist (je eine Eingangsleitung 28 und 32). Die Ausgänge der sieben Tore 38 führen zu einem ODER-Tor 40, dessen Ausgang über Leitung 34 zum Schalter 36 führt.

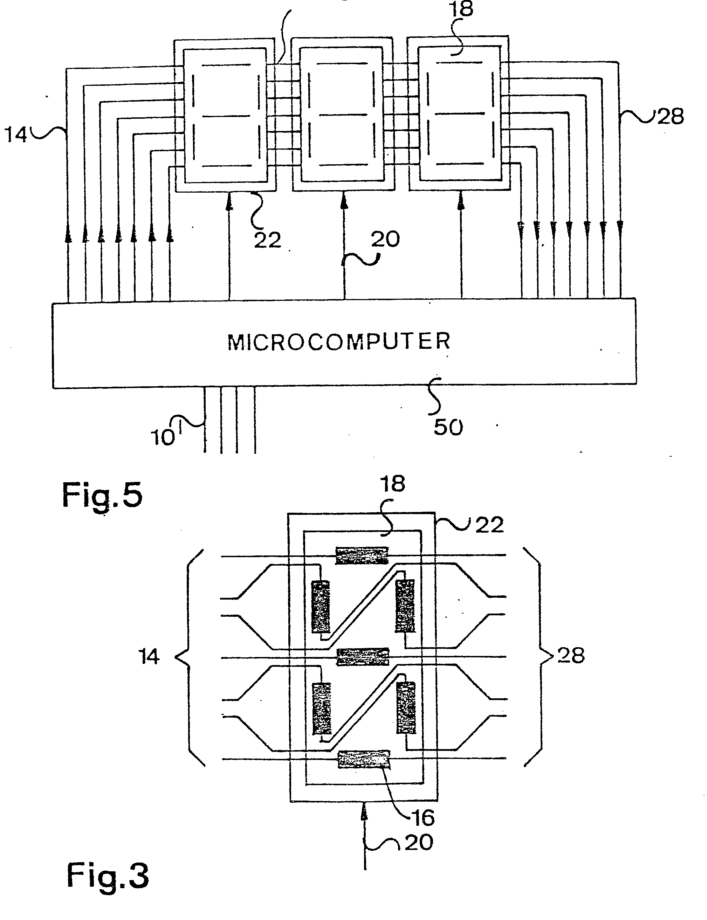

Figur 3 zeigt das Anzeigeelement 18. Jedes Segment 16 ist an einer Seite mit einer Steuerleitung 14 und an einer gegenüberliegenden Seite mit einer Prüfleitung 28 verbunden.

Bei der beschriebenen Anordnung kann durch einen zweiten Decoder-Treiber 12 die Funktionsfehlersicherheit noch beträchtlich gesteigert werden. Der zweite Decoder-Treiber 12 würde dieselben BCD-Daten zugeführt erhalten wie der erste, und seine sieben Segmentleitungen 14 wären anstelle der Zweigleitungen 32 an den Comparator 30 feführt. Mit einer solchen Abwandlung würden gleichzeitig die Decoder-Treiber 12 auf korrektes Funktionieren geprüft.

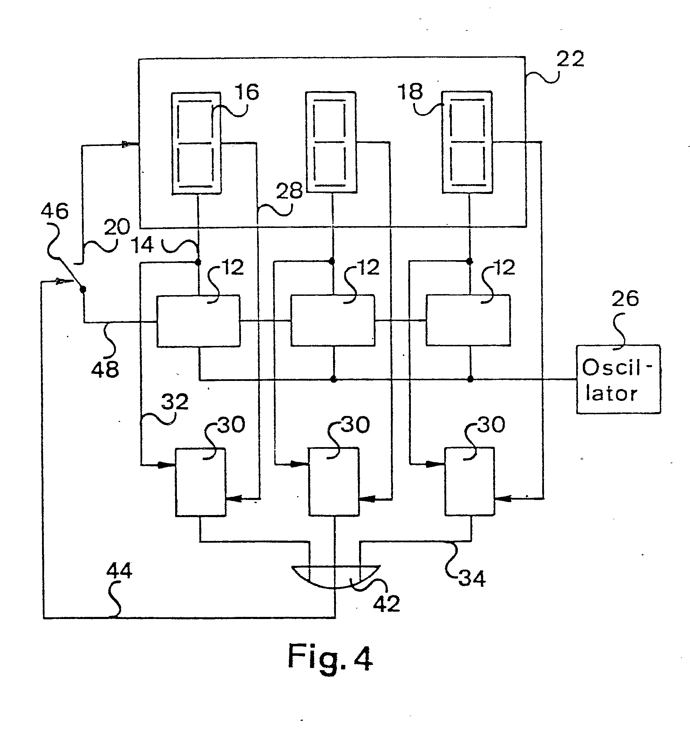

Beispiel II (Figuren 2, 3 und 4)

Das zweite Ausführungsbeispiel ist eine dreistellige Anzeige mit einer für alle Anzeigestellen 18 gemeinsamen Gegenelektrode 22'. Der Grundaufbau ist der gleiche wie im Beispiel I, und die insoweit entsprechenden Elemente sind gleich beziffert wie dort. Dabei versteht sich, dass die Leitungsstränge 14, 28 und 32 stellvertretend für je sieben Einzelleitungen eingezeichnet sind.

Die Arbeitsweise ist ebenfalls gleich wie diejenige im Beispiel I, lediglich die Fehlermeldung funktioniert hier etwas anders: Die Ausgänge der einzelnen Komparatoren 30 sind über Leitungen 34 mit einem weiteren ODER-Tor 42 verbunden. Dessen Ausgang führt über Leitung 44 zu einem elektronischen Schalter 46, der in die Leitung 20 von den Decoder-Treibern 12 zur Gegenelektrode 22' eingesetzt ist.

Die Anordnung wirkt wie folgt: So lange die Leitung 44 niedrigen Pegel führt (Gutsignal von den Komparatoren 30), gelangt die Wechselspannung über Leitung 20 unverändert zur Gegenelektrode 22', die Anzeige arbeitet normal. Wechselt die Leitung 44 dagegen auf hohen Pegel (Fehlersignal vom Tor 42), so wird die Anzeige durch Oeffnen des Schalters 46 dunkelgesteuert.

Eine andere, etwas aufwendigere Möglichkeit besteht darin, analog zum Beispiel I bei jedem der in C-MOS-Technik ausgeführten Decoder-Treiber 12 durch das Fehlersignal die Speisung unterbrechen zu lassen.

Beispiel III (Figuren 3, 5)

Dieses Beispiel zeigt eine elegante Möglichkeit, den Aufwand zu verringern. Während in Beispiel II die Anzeige statisch betrieben wurde (alle Stellen gleichzeitig aktiviert), ist hier ein an sich bekannter Multiplex-Betrieb vorausgesetzt, d.h. gleichrangige Segmente werden jeweils gleichzeitig angesteuert, während die Stellen 18 sequentiell angesteuert werden.

Die digitalen Daten (z.B. Messergebnisse) gelangen über Leitungen 10' in einen Mikrocomputer 50. Dieser steuert über je sieben Leitungen 14 die gleichrangigen Segmente 16 aller Dezimalen und über Leitungen 20 die Gegenelektroden 22. Dabei sind die Segmentleitungen am Ende der Anzeige als Leitungen 28 wieder zurückgeführt zum Mikrocomputer 50. Dieser prüft, ob die Spannungspegel jedes zur selben Segmentreihe gehörigen Leitungspaares 14, 28 gleich sind, und steuert bei Uebereinstimmung die Gegenelektroden 22 an. Tritt eine Ungleichheit auf, so wird die Gegenelektrode 22 gleichphasig erregt, und die Anzeige wird bzw. bleibt dunkel. Andere Möglichkeiten der Fehleranzeige wären z.B. eine Veränderung des zeitlichen Rhythmus mit dem Ziel, die Anzeige blinken zu lassen, oder aber die Anzeige auf '888' zu steuern, wobei die fehlenden gleichrangigen Segmente ins Auge fielen.

Zwischen den einzelnen Stellen 18 der Anzeige ist jeweils ein und dasselbe zwei gleichrangige Segmente 16 verbindende Leiterstück sowohl Steuerleitung 14 als auch Prüfleitung 28.

Es versteht sich, dass die erfindungsgemässe Methode nicht auf dreistellige Anzeigen gemäss den Beispielen II und III beschrankt ist. Die Anzahl Stellen spielt prinzipiell keine Rolle

## Patentansprüche

1. Flüssigkristallanzeige mit mehreren Segmenten, die an je eine Steuerleitung angeschlossen sind, dadurch gekennzeichnet, dass wenigstens ein Teil der Segmente (16) ausserdem direkt an je eine Prüfleitung (28) angeschlossen ist und dass die Prüfleitungen (28) mit einer Kontrolleinrichtung (30) verbunden sind.

2. Anzeige nach Anspruch 1, dadurch gekennzeichnet, dass die Prüfleitung (28) jeweils der Steuerleitung (14) gegenüberliegend an das Segment (16) angeschlossen ist.

3. Mehrstellige, im Multiplexverfahren betriebene Anzeige nach Anspruch 1 oder 2, dadurch gekennzeichnet, dass benachbarte gleichrangige Segmente (16) durch jeweils eine als Steuer- und Prüfleitung dienende Leitung (14, 28) miteinander verbunden sind, wobei die Leitungen von der ersten oder der letzten Stelle zur Kontrolleinrichtung (30) geführt sind.

4. Anzeige nach einem der vorangehenden Ansprüche, dadurch gekennzeichnet, das die Kontrolleinrichtung (30) einen Mikrocomputer (50) umfasst, der bei Auftreten eines Fehlersignals die Anzeige dunkelsteuert.

5. Verfahren zur Ueberwachung einer Flüssigkristall-Segmentanzeige, dadurch gekennzeichnet, dass der Spannungspegel der jeweiligen Steuerleitung oder -Leitungen wenigstens eines teils der Segmente mit demjenigen einer am jeweiligen Segment angeschlossenen Prüfleitung verglichen wird und bei Nichtübereinstimmung ein Fehlersignal erzeugt wird.

6. Verfahren nach Anspruch 5, dadurch gekennzeichnet, dass bei Auftreten eines Fehlersignals die Anzeige dunkelgesteuert wird.

## Claims

1. Liquid crystal display with a plurality of segments each connected with a control lead, characterized in that at least some of the segments (16) are further directly connected to a test lead (28) and that the test leads (28) are connected with a control device (30).

2. Display as in claim 1, characterized in that the test lead (28) is connected to the segment (16) opposite the respective control lead (14).

3. Multiplexed display comprising a plurality of digits, as in claim 1 or 2, characterized in that adjacent corresponding segments (16) are connected with each other by one lead (14, 28) serving as control and test lead, respectively, the leads from the first or from the last digit being connected with the control device (30).

4. Display as in claim 1, claim 2 or claim 3, characterized in that the control device (30) comprises a microcomputer (50) which causes the display to blank if an error signal occurs.

5. Method for monitoring a liquid crystal segment-display, characterized in that the voltage level of the respective control lead or leads of at least part of the segments is compared with that of a test lead connected with the same segment, and that an error signal is generated in case of non-accordance.

6. Method as in claim 5, characterized in that the display is blanked when an error signal occurs.

## Revendications

1. Afficheur à cristaux liquides et à segments, reliés chacun à une ligne de commande, ledit afficheur étant caractérisé en ce que certains segments (16) au moins sont en outre reliés directement chacun à une ligne de test (28); et les lignes de test (28) sont reliées à un dispositif de contrôle (30).

2. Afficheur selon revendication 1, caractérisé en ce que chaque ligne de test (28) est connectée au segment (16) en regard de la ligne de commande (14).

3. Afficheur à plusieurs rangs fonctionnant en multiplex selon une des revendications 1 et 2, caractérisé en ce que des segments (16) voisins de même position sont reliés par une ligne (14, 28) servant de ligne de commande et de test, les lignes du premier ou du dernier rang étant reliées au dispositif de contrôle (30).

4. Afficheur selon une quelconque des revendications 1 à 3, caractérisé en ce que le dispositif de contrôle (30) comporte un micro-ordinateur (50), qui efface l'afficheur lors de l'apparition d'un signal d'erreur.

5. Procédé de surveillance d'un afficheur à cristaux liquides et à segments, caractérisé en ce que le niveau de tension de la ou des lignes de commande de certains segments au moins est comparé à celui d'une ligne de test reliée au segment considéré, avec production d'un signal d'erreur en cas de non-concordance.

6. Procédé selon revendicaton 5, caractérisé par l'effacement de l'afficheur lors de l'apparition d'un signal d'erreur.

Fig.1

Fig.2

14/28

18

14

28

22

20

MICROCOMPUTER

10

50

Fig.5

18

22

14

28

16

20

Fig.3

Fig. 4